# EUROPÄISCHE PATENTSCHRIFT

(11) **EP 2 195 591 B1**
(45) Veröffentlichungstag und Bekanntmachung des Hinweises auf die Patenterteilung: **06.12.2017**
(21) Anmeldenummer: 08804044.9
(22) Anmeldetag: 11.09.2008
(51) Int. Cl.: C09K 3/18, F25D 21/04

(54) **KÄLTEGERÄT**
REFRIGERATION DEVICE
APPAREIL FRIGORIFIQUE

(30) Priorität: 02.10.2007 DE 102007047116
(43) Veröffentlichungstag der Anmeldung: 16.06.2010
(73) Patentinhaber: BSH Hausgeräte GmbH, 81739 München (DE)
(72) Erfinder: LAPCHENKO, Tetyana, 89522 Heidenheim (DE)
(86) Internationale Anmeldenummer: PCT/EP2008/062079
(87) Internationale Veröffentlichungsnummer: WO 2009/047078

(56) Entgegenhaltungen:
- WO-A1-01/94378
- FR-A- 2 794 225
- US-A- 3 828 570
- US-A- 4 206 615

## Beschreibung

Die Erfindung betrifft ein Kältegerät nach dem Oberbegriff von Anspruch 1. Ein solches Gerät ist z.B. aus der FR 2 794 225 A1 bekannt. Bei Kältegeräten, wie z. B. Kühlschränken, Gefriertruhen oder Gefrierschränken ist ein isolierter Innenraum vorgesehen, der üblicherweise durch die Innenwände eines Kühlbehälters und die Innenseite einer Tür begrenzt wird. Die zu kühlende Ware wird in dem Kühlbehälter gelagert. Um den Innenbehälter zu kühlen wird ein Kältemittelkreislauf verwendet, durch den ein Kältemittel zirkuliert. Das Kältemittel wird in einem Verdampfer stark abgekühlt. Der Verdampfer befindet sich in dem zu kühlenden Innenraum. Er entzieht der Luft im Innenraum die Wärme und überträgt sie auf das Kühlmittel, welches die Wärmeenergie zur Außenseite des Kältegeräts befördert und dort an die Umgebungsluft abgibt. Der Verdampfer weist im allgemeinen eine Temperatur auf, die unterhalb des Gefrierpunkts von Wasser liegt.

Bekannte Verdampferarten sind z. B. die so genannten Drahtrohrverdampfer, bei denen Stahlrohr auf Drahtstäbe aufgeschweißt wird, so dass sich ein verhältnismäßig stabiles Gitter ergibt. Bei einer anderen bekannten Verdampferart werden Aluminiumrohre an dünnwandigen Aluminiumplatten befestigt. Ebenso ist es bekannt, ein temperaturleitfähiges Metallrohr mäanderförmig zu biegen und beidseitig Kunststoffteile zur Stabilisierung des Gebildes aufzustecken. Diese Verdampfer werden dann in mehreren Ebenen in das Kältegerät eingeschoben, wobei die seitlichen Kunststoffteile zur Befestigung an den Innenwänden des Kühlbehälters und gleichzeitig als Gleitschienen für Behälter zur Aufnahme der zu kühlenden Ware dienen.

Allen diesen Verdampfern ist gemeinsam, dass an ihnen die Feuchtigkeit der in dem Innenraum befindlichen Luft kondensiert und eine Eisschicht bildet. Die Geschwindigkeit, mit der die Eisschicht gebildet wird hängt z. B. davon ab, wie häufig die Tür des Kältegeräts geöffnet wird, wie lange die Tür durchschnittlich geöffnet bleibt und wie hoch der Feuchtigkeitsgehalt der Umgebungsluft ist.

Die Eissicht auf dem Verdampfer behindert den Wärmeübergang von der Luft im Innenraum des Kältegeräts auf das Kältemittel in dem Verdampfer. Mit wachsender Eisschicht muss daher immer mehr Energie aufgewendet werden, um dem Innenraum die Wärme entziehen zu können. Das Kältegerät muss daher in bestimmten Abständen abgetaut werden, um die Eisschicht auf dem Verdampfer wieder zu entfernen. Bei aufwändig konstruierten Kältegeräten kann dieser Abtauvorgang automatisch erfolgen, bei einfacher aufgebauten Kältegeräten muss der Abtauvorgang manuell durchgeführt werden. In beiden Fällen findet ein nicht unerheblicher Wärmeeintrag in das Kältegerät statt. Diese Wärmeenergie muss nach dem Abtauvorgang wieder aus dem Innenraum entfernt werden.

Das Bilden einer Eisschicht auf dem Verdampfer bedeutet folglich in jedem Fall einen erhöhten Energieverbrauch. Es muss daher immer abgewogen werden, bei welcher Stärke der Eisschicht ein Abtauvorgang durchzuführen ist. Auch hierfür wurden bereits Methoden bekannt, um die Dicke der Eisschicht zu ermitteln und auf diese Weise die Häufigkeit der Abtauvorgänge zu optimieren. Bei allen bisher bekannt gewordenen Kältegeräten müssen diese Abtauvorgänge jedoch weiterhin durchgeführt werden. Sowohl durch die schlechte Wärmeleitfähigkeit der Eisschicht auf dem Verdampfer als auch durch den Abtauvorgang selbst ergeben sich bei allen bekannten Kältegeräten erhöhte Werte für den Energieverbrauch.

Die Offenlegungsschrift FR 2 794 225 A1 zeigt ein Kältegerät mit einem Sichtfenster, wobei das Sichtfenster eine Beschichtung aufweist, die organische Substanzen enthält, nämlich Polycarbonat oder verschiedene polymere Kunststoffe.

Die Patentschrift US 4,206,615 zeigt ein Kältegerät mit einer Fensterstruktur bestehend aus zwei Fenstern, welche eine infrarotreflektierende Beschichtung aufweisen.

Die Patentschrift US 3,828,570 zeigt einen Wärmetauscher umfassend ein Gehäuse mit einer Kühlspule. Oberhalb der Kühlspule ist eine Sprayvorrichtung mit einer Düse angeordnet. Durch die Düse kann ein Antigefriermittel auf die Kühlspulen gesprüht werden.

Der Erfindung liegt die Aufgabe zugrunde, ein Kältegerät nach dem Oberbegriff von Anspruch 1 so auszugestalten, dass die Bildung einer Eisschicht, insbesondere auf dem Verdampfer, verhindert werden kann, um auf diese Weise den Energieverbrauch zu senken.

Gelöst wird die Aufgabe gemäß der Erfindung durch ein Kältegerät mit den Merkmalen von Anspruch 1. In arktischen Gebieten sind Lebewesen gefunden worden, die selbst bei niedrigsten Temperaturen überleben können, auch dann wenn ihre Körpertemperatur unter den Gefrierpunkt von Wasser absinkt. So wurden beispielsweise in Sibirien Insekten entdeckt, die auch bei minus 60°C noch überlebensfähig sind. Diese Insekten weisen einen Stoff auf, der das Wachstum von Eiskristallen verhindert. Auf diese Weise können weder die Körperflüssigkeiten in den kristallinen Zustand übergehen, noch kann sich auf der Körperoberfläche eine Eisschicht bilden. Diese Insekten gehen deshalb nicht in eine Starre über und auch der Bewegungsapparat kann mit den notwendigen Nährstoffen versorgt werden. Solche organischen Substanzen wurden inzwischen nicht nur bei Insekten sondern auch bei Fischen und Pflanzen gefunden. Erfindungsgemäß werden solche organischen Substanzen, die das Wachstum von Eiskristallen verhindern oder einschränken, in eine Beschichtung für zur Vereisung neigende Oberflächen im Innenraum eines Kältegeräts eingebunden.

Auf diese Weise kann ein aus der Natur bekanntes Phänomen auf eine technische Anwendung übertragen werden. Die zur Vereisung neigenden Oberflächen, die mit dieser Beschichtung versehen sind, setzen keine Eisschicht an. Der Wärmeübergang von der Luft im Innenraum des Kältegeräts auf das Kältemittel wird somit nicht durch eine Eisschicht verschlechtert und die Energieeffizienz des Kältegeräts wird verbessert. Weiterhin brauchen keine Abtauvorgänge durchgeführt werden. Hierdurch lässt sich weitere Energie einsparen. Erfindungsgemäß weisen die organischen Substanzen synthetisch erzeugte Proteine oder Nukleinsäuren auf. Insbesondere werden die Teilsequenzen synthetisch erzeugt, die für den so genannten Anti-Freeze Mechanismus verantwortlich sind.

Erfindungsgemäß ist die Beschichtung auf Basis einer peptidfuntionalisierten Substanz, insbesondere als Protein-Lack aufgebaut. Die Peptide werden bei ihrer Synthese so modifiziert, dass sie über Verbindungsmoleküle an die Oberfläche gebunden werden können.

Besonders vorteilhaft ist die Beschichtung als Lack ausgeführt. Die Beschichtung der zur Vereisung neigenden Oberflächen kann daher in einfacher Weise aufgesprüht werden, oder das entsprechende Bauteil wird vor seinem Einbau in das Kältegerät durch einen Tauchvorgang beschichtet.

Bei einem Gefriergerät werden vorteilhaft alle Bauteile beschichtet, die eine Temperatur unter dem Gefrierpunkt von Wasser aufweisen. Hierzu sind auch Lagerkörbe, Fachträger aber auch die Innenwände des Kühlbehälters zu rechnen. Bei einem Kühlschrank ist es dagegen ausreichend, die Kältemittel führenden Bauteile, die im Innenraum verlaufen, entsprechend zu beschichten. Hierzu gehören der Verdampfer, aber auch die Zuleitung zum und die Ableitung vom Verdampfer. Bei einem Kältegerät, welches über ein Peltierelement gekühlt wird, ist es selbstverständlich auch sinnvoll, die Kalt-Seite des Peltierelements in dieser Weise zu beschichten.

Weitere Einzelheiten und Vorteile der Erfindung ergeben sich aus den Unteransprüchen im Zusammenhang mit der Beschreibung eines Ausführungsbeispiels, das anhand der Zeichnung eingehend erläutert wird.

Es zeigt:
- Fig. 1: die Explosionsdarstellung des Kühlbehälters eines erfindungsgemäßen Kältegeräts und
- Fig. 2: einen Schnitt durch ein erfindungsgemäß beschichtetes Verdampferrohr.

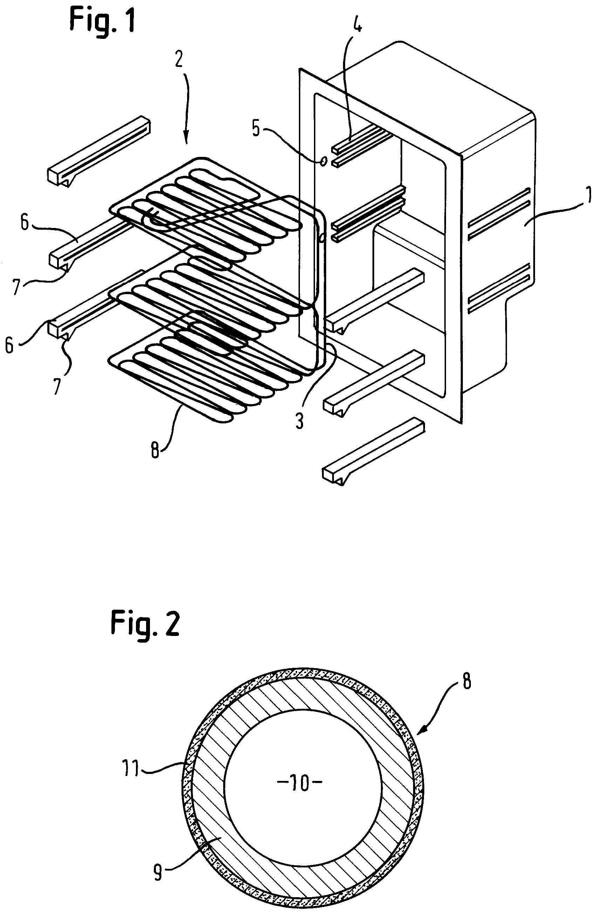

In Fig. 1 sind mehrere Rohrverdampfer 2 miteinander zu einem modular aufgebauten Rohrverdampfer-Verbund zusammengestellt. Die Verbindungsleitungen 3 zwischen den einzelnen Rohrverdampfern 2 verlaufen im Innenraum des Kältegeräts entlang der rechten hinteren, vertikal verlaufenden Kante eines Kühlbehälters 1.

In dem hier gezeigten Ausführungsbeispiel sind drei unterschiedliche Rohrverdampfer zu dem Rohrverdampfer-Verbund zusammengestellt. An dem oberen Rohrverdampfer sind der Zu- und der Ablauf des Rohrverdampfer-Verbunds vorgesehen. Der mittlere Rohrverdampfer besitzt ein nach oben und ein nach unten gebogenes Rohrende. Bei dem unteren Rohrverdampfer sind dagegen beide Rohrenden nach oben gebogen. In ein Kältegerät mit einem höheren Kühlbehälter könnten weitere Rohrverdampferebenen eingebaut werden. Diese weiteren Rohrverdampfer wären alle der selben Bauart wie der mittlere Rohrverdampfer zuzurechnen und hätten ein nach oben und ein nach unten gebogenes Rohrende.

Zur Fixierung des Verdampferrohrs 8 und zur Stabilisierung der Rohrverdampfer 2 sind seitlich an jedem Rohrverdampfer 2 die Aufsteckteile 6 befestigt. Mit diesen Aufsteckteilen 6 werden die Rohrverdampfer 2 in Führungen 4 eingeschoben, die in den Seitenwänden des Kühlbehälters 1 vorgesehen sind. Dadurch sind die Rohrverdampfer 2 in dem Kühlbehälter 1 in ihrer vertikalen Position gesichert. Zur horizontalen Sicherung sind an den Aufsteckteilen 6 in der Zeichnung nicht sichtbare elastische Nasen vorgesehen, die in Vertiefungen 5 in den Seitenwänden des Kühlbehälters 1 einrasten.

Weiterhin weisen die Aufsteckteile 6 die nach unten gerichteten Anschläge 7 auf. Diese Anschläge 7 dienen als Stopper für ausziehbare Behälter, die die Oberseite der Aufsteckteile 6 als Gleitfläche nutzen. Die ausziehbaren Behälter sind von ihrer Höhe so ausgelegt, dass sie mit geringem Spiel zwischen die einzelnen Rohrverdampfer 2 passen. Sie werden in leicht gekippter Stellung eingeführt, so dass die Rückwand der Behälter hinter die Anschläge 7 gebracht werden kann.

Beim Einschieben der Behälter dienen diese Anschläge 7 dem Zweck, dass die Rückwand des Behälters nicht an der Rückwand des Kühlbehälters 1 anliegt und der notwendige Luftspalt zwischen den beiden Rückwänden auch bei voll eingeschobenem Behälter bestehen bleibt. Diese Sicherung wird dadurch erreicht, dass der Anschlag 7 an der Vorderwand des Behälters anliegt und so das weitere Einschieben stoppt.

Da die ausziehbaren Behälter nicht direkt auf den Rohrverdampfer 2 sondern auf den Aufsteckteilen 6 gleiten, muss für das Verdampferrohr keine abriebfeste und schützende Beschichtung gewählt werden, sondern die Beschichtung kann nach vollkommen anderen Kriterien ausgewählt werden. Erfindungsgemäß sind die Rohrverdampfer 2 daher mit einem so genannten AFP-Lack 11 (Anti-Freeze-Protein-Lack) beschichtet. Mit diesem AFP-Lack sind auch die Verbindungsleitungen 3 beschichtet.

Der Aufbau des Verdampferrohrs 8 ist in Fig. 2 im Schnitt dargestellt. Das Verdampferrohr 8 weist üblicherweise ein Metallrohr 9 auf. Dieses Metallrohr 9 besteht aus einem Material, das sich gut verarbeiten - insbesondere biegen - lässt und eine gute Wärmeleitfähigkeit aufweist. Bei vielen Kältegeräten wird deshalb zur Herstellung des Verdampferrohrs 8 Aluminium verwendet. Das Metallrohr 9 umschließt den Führungskanal 10 für das Kältemittel.

Auf der Außenseite des Metallrohrs 9 ist der AFP-Lack 11 aufgebracht. Dieser Lack enthält enthält ein Protein, welches die Bildung von Eiskristallen verhindert. Dies hat zur Folge, dass auf dem Verdampferrohr 8 zwar Wasser aus der Luft im Kühlbehälter 1 kondensiert aber nicht den kristallinen Zustand übergeht. Das Wasser kann in üblicher, hier nicht dargestellter Weise gesammelt und nach außen geleitet werden, wo es in einer Verdunstungsschale, die beispielsweise über einem Verdichter angeordnet ist, in die Umgebungsluft abgegeben wird.

Der Wärmeübergang von der Luft im Innern des Kühlbehälters 1 auf das Kältemittel im Führungskanal 10 des Verdampferrohrs 8 verschlechtert sich folglich auch nach vielen Betriebsstunden des Kältegeräts nicht. Eine Erhöhung des Energieverbrauchs durch einen schlechteren Wärmeübergang kann somit ausgeschlossen werden. Weiterhin muss das Gerät nicht abgetaut werden. Nach einem Abtauvorgang weist der Innenraum eines Kältegeräts normalerweise die selbe Temperatur wie die Umgebungsluft auf. Der Innenraum muss daher nach jedem Abtauvorgang zuerst wieder auf das normal vorherrschende Temperaturniveau abgesenkt werden. Hierfür ist eine nicht unerhebliche Energiemenge notwendig. Bei dem erfindungsgemäßen Kältegerät kann auch diese Energie eingespart werden.

### Bezugszeichenliste:

- 1: Kühlbehälter
- 2: Rohrverdampfer
- 3: Verbindungsleitung
- 4: Führung
- 5: Vertiefung
- 6: Aufsteckteil
- 7: Anschlag
- 8: Verdampferrohr
- 9: Metallrohr
- 10: Führungskanal
- 11: AFP-Lack

## Patentansprüche

1. Kältegerät mit einem isolierten Innenraum, in dem sich wenigstens ein gekühltes Bauteil (2) befindet, dessen Oberfläche zur Vereisung neigt, wobei die zur Vereisung neigende Oberfläche mit einer Beschichtung (11) versehen ist, die organische Substanzen aufweist, welche das Wachstum von Eiskristallen verhindern oder einschränken, **dadurch gekennzeichnet, dass** die organischen Substanzen synthetisch erzeugte Proteine oder Nukleinsäuren aufweisen.

2. Kältegerät nach Anspruch 1, **dadurch gekennzeichnet, dass** die Beschichtung auf Basis einer peptidfunktionalisierten Substanz aufgebaut ist, und Peptide über Verbindungsmoleküle an die Oberfläche gebunden sind.

3. Kältegerät nach Anspruch 1 oder 2, **dadurch gekennzeichnet, dass** die Beschichtung ein Lack (11) ist.

4. Kältegerät nach Anspruch 1, 2 oder 3, **dadurch gekennzeichnet, dass** Kältemittel führende Bauteile (2, 3) mit der Beschichtung versehen sind.

5. Kältegerät nach Anspruch 4, **dadurch gekennzeichnet, dass** ein Verdampfer (2) mit der Beschichtung versehen ist.

## Claims

1. Refrigeration device having an insulated interior which contains at least one refrigerated component part (2) whose surface has a tendency to ice up, wherein the surface tending to ice up is provided with a coating (11) which has organic substances which prevent or restrict the growth of ice crystals, **characterised in that** the organic substances have synthetically created proteins or nucleic acids.

2. Refrigeration device according to claim 1, **characterised in that** the coating is built up on the basis of a peptide-functionalised substance, and peptides are bound to the surface via binding molecules.

3. Refrigeration device according to claim 1 or 2, **characterised in that** the coating is a lacquer (11).

4. Refrigeration device according to claim 1, 2 or 3, **characterised in that** refrigerant-conducting component parts (2, 3) are provided with the coating.

5. Refrigeration device according to claim 4, **characterised in that** an evaporator (2) is provided with the coating.

## Revendications

1. Appareil frigorifique avec un espace intérieur isolé dans lequel se trouve au moins un composant refroidi (2) dont la surface a tendance à givrer, ladite surface ayant tendance à givrer étant pourvue d'un revêtement (11) comprenant des substances organiques qui empêchent ou limitent la croissance de cristaux de glace, **caractérisé en ce que** les substances organiques comprennent des protéines ou acides nucléiques synthétisés.

2. Appareil frigorifique selon la revendication 1, **caractérisé en ce que** le revêtement est à base d'une substance de peptides fonctionnalisés, et des peptides sont liés à la surface au moyen de molécules de liaison.

3. Appareil frigorifique selon la revendication 1 ou 2, **caractérisé en ce que** le revêtement est un vernis (11).

4. Appareil frigorifique selon la revendication 1, 2 ou 3, **caractérisé en ce que** des composants (2, 3) à circulation de réfrigérant sont pourvus du revêtement.

5. Appareil frigorifique selon la revendication 4, **caractérisé en ce qu'**un évaporateur (2) est pourvue du revêtement.
